# EUROPÄISCHE PATENTANMELDUNG

(11) **EP 1 411 021 A1**
(43) Veröffentlichungstag der Anmeldung: **21.04.2004**
(21) Anmeldenummer: 03022688.0
(22) Anmeldetag: 07.10.2003
(51) Int. Cl.: B66F 9/075, G05D 23/19

(54) **Flurförderzeug mit einem Hubgerüst und einem Temperaturschalter**

(30) Priorität: 18.10.2002 DE 10248655
(71) Anmelder: STILL WAGNER GmbH & Co KG, 72766 Reutlingen-Mittelstadt (DE)
(72) Erfinder: Haspel, Volker, 72770 Reutlingen (DE); Schmid, Jörn, 72336 Balingen-Ostdorf (DE)
(74) Vertreter: Lang, Michael

(57) **Zusammenfassung**

Gegenstand der Erfindung ist ein Flurförderzeug mit einem Hubgerüst, mindestens einem im Bereich des Hubgerüsts angeordneten Signalgeber zum Erzeugen eines von der Hubhöhe des Hubgerüsts abhängigen Signals, mindestens einem Heizelement zum Erwärmen des Signalgebers und mindestens einem Temperaturschalter (1) zum Steuern des Heizelements in Abhängigkeit von einem Temperaturwert. Erfindungsgemäß sind mindestens zwei Temperaturschalter (1, 2) vorgesehen, die mit einer elektrischen Steuervorrichtung (8) in Wirkverbindung stehen. Die Steuervorrichtung (8) ist derart ausgeführt, dass sie die Ausgangssignale der Temperaturschalter (1, 2) auf Plausibilität überprüft. Die Temperaturschalter (1, 2) sind im Wesentlichen identisch ausgeführt und in unmittelbarer Nähe zueinander angeordnet.

## Beschreibung

Die Erfindung betrifft ein Flurförderzeug mit einem Hubgerüst, mindestens einem im Bereich des Hubgerüsts angeordneten Signalgeber zum Erzeugen eines von der Hubhöhe des Hubgerüsts abhängigen Signals, mindestens einem Heizelement zum Erwärmen des Signalgebers und mindestens einem Temperaturschalter zum Steuern des Heizelements in Abhängigkeit von einem Temperaturwert.

Flurförderzeuge, wie z.B. Gegengewichtsgabelstapler, Schubmaststapler, Hochregalstapler oder Hochhubkommissionierer weisen im Bereich des Hubgerüsts häufig einen oder mehrere Signalgeber auf, mit denen die aktuelle Hubhöhe des Hubgerüsts, also die Höhe eines am Hubgerüst geführten Lastaufnahmemittels, in Stufen oder stufenlos ermittelt wird. In Abhängigkeit von dieser gemessenen Hubhöhe wird dann von einer Fahrzeugsteuerung in verschiedene Funktionen des Flurförderzeugs eingegriffen. Beispielsweise kann ab einer bestimmten Hubhöhe die Fahrgeschwindigkeit reduziert oder das Lastgewicht beschränkt werden.

Bei bestimmten Arbeitsumgebungen des Flurförderzeugs, insbesondere bei einem Einsatz des Flurförderzeugs in Kühlräumen, besteht die Gefahr, dass die im Bereich des Hubgerüsts angeordneten Signalgeber vereisen und dadurch in ihrer Funktion beeinträchtigt werden. Um ein Vereisen zu verhindern, ist es bekannt, im Bereich der Signalgeber elektrische Heizelemente anzuordnen. Diese Heizelemente sind entweder ständig in Betrieb oder werden mittels eines Temperaturschalters in Abhängigkeit von der Umgebungstemperatur ein- und ausgeschaltet. Bei bekannten, in Abhängigkeit von der Umgebungstemperatur gesteuerten Anordnungen ist ein einziger Temperaturschalter vorgesehen, der die Stromversorgung des Heizelements direkt oder über ein Relais steuert. Ein defekt des Temperaturschalters kann dabei zu einem vollständigen Ausfall oder einem ständigen Betrieb des Heizelements führen, was ein Vereisen bzw. ein Überhitzen des Signalgebers für die Hubhöhe zur Folge hat, und damit eine Beschädigung des Signalgebers. Dies kann zu kritischen Betriebssituationen führen, da in Abhängigkeit von den Ausgangssignalen des Signalgebers auch sicherheitsrelevante Funktionen gesteuert werden.

Der vorliegenden Erfindung liegt daher die Aufgabe zugrunde, ein Flurförderzeug zur Verfügung zu stellen, bei dem gefährliche Betriebssituationen infolge eines Ausfalls des Temperaturschalters sicher vermieden werden können.

Diese Aufgabe wird erfindungsgemäß dadurch gelöst, dass mindestens zwei Temperaturschalter vorgesehen sind, die mit einer elektrischen Steuervorrichtung in Wirkverbindung stehen, wobei die Steuervorrichtung derart ausgeführt ist, dass sie die Ausgangssignale der Temperaturschalter auf Plausibilität überprüft. Die Schaltzustände der Temperaturschalter werden von der Steuervorrichtung fortlaufend überwacht. Wenn die beiden Temperaturschalter sich widersprechende Signale liefern, was darauf hindeutet, dass einer der beiden Temperaturschalter defekt ist, wird dies von der Steuervorrichtung erkannt.

Eine besonders einfache Anordnung ergibt sich, wenn die Temperaturschalter im Wesentlichen identisch ausgeführt sind. Die identischen Temperaturschalter weisen ein gleiches Schaltverhalten auf, wodurch sich die Ausgangssignale der Temperaturschalter besonders einfach vergleichen lassen.

Um sicherzustellen, dass die beiden Temperaturschalter stets die gleiche Temperatur aufweisen, sind die Temperaturschalter einander benachbart, vorzugsweise in unmittelbarer Nähe zueinander angeordnet. Auch dies erleichtert den einfachen Vergleich der Ausgangssignale der Temperaturschalter.

Der die Temperaturschalter durchfließende elektrische Strom kann minimiert werden, wenn das Ausgangssignal eines ersten Temperaturschalters ein Relais ansteuert, wobei ein Schalter des Relais mit einem Leistungseingang des Heizelements verbunden ist. Der Temperaturschalter schaltet dabei lediglich den Steuerstrom für das Relais.

Gemäß einer ersten möglichen Schaltung ist ein Schalter des Relais mit einem Signaleingang der Steuervorrichtung verbunden. Die Steuervorrichtung kann dabei direkt mit dem Schalter verbunden sein, der auch zur Leistungsversorgung des Heizelements dient. Ebenso ist es möglich, das Relais mit einem zweiten Schalter zu versehen, mit dem dann ausschließlich der Signaleingang der Steuervorrichtung verbunden ist.

Eine zweite mögliche Schaltung sieht vor, dass das Ausgangssignal eines ersten Temperaturschalters direkt einem Signaleingang der Steuervorrichtung zugeführt wird. Der Temperaturschalter ist dabei direkt mit der Steuervorrichtung verbunden. Wenn der Temperaturschalter so ausgeführt ist, dass er entsprechend hohe Ströme verkraftet, kann auch die Leistungsversorgung des Heizelements direkt, also ohne Verwendung eines Relais, über den Temperaturschalter erfolgen.

Das Ausgangssignal eines zweiten Temperaturschalters wird direkt einem Signaleingang der Steuervorrichtung zugeführt. Der zweite Temperaturschalter dient ausschließlich zur Erzeugung eines zweiten, redundanten Temperatursignals. Da die hierbei fließenden Ströme relativ klein sind, ist die Kombination des zweiten Temperaturschalters mit einem Relais nicht erforderlich.

Gemäß einer bevorzugen Ausführungsform ist die Steuervorrichtung derart ausgeführt, dass die Überprüfung der Ausgangssignale der Temperaturschalter auf Plausibilität dadurch erfolgt, dass die Ausgangssignale verglichen werden. Bei der oben erläuterten benachbarten Anordnung der beiden identischen Temperaturschalter müssten diese im Rahmen ihrer Messgenauigkeit stets gleiche Ausgangssignale liefern. Dies ermöglicht ein einfaches Vergleichen der Ausgangssignale, um deren Plausibilität festzustellen.

Die Steuervorrichtung ist derart ausgeführt, dass die Ausgangssignale dann als nicht plausibel gelten, wenn Sie über einen vorgegebenen Zeitraum hinweg unterschiedliche Schaltstellungen der Temperaturschalter signalisieren. Durch die Definition des vorgegebenen Zeitraums werden Abweichungen der Umschaltzeitpunkte der Temperaturschalter vernachlässigt, solange sie innerhalb der normalen Toleranz liegen.

Die Steuervorrichtung ist derart ausgeführt, dass dann, wenn die Ausgangssignale der Temperaturschalter als nicht plausibel gelten, eine Warneinrichtung aktiviert wird und/oder in eine Steuerung des Flurförderzeugs eingegriffen wird. Die Warneinrichtung kann beispielsweise einen Signaltongeber, eine Anzeigelampe oder eine entsprechende Ausgabe eines Fahrzeugrechners umfassen. Bei einem Eingriff in die Steuerung des Flurförderzeugs können Funktionen, die in Abhängigkeit von der Hubhöhe beeinflusst werden und deshalb ein Funktionieren der entsprechenden Signalgeber voraussetzen, auf ein sicheres Maß zurückgefahren, beispielsweise verlangsamt werden.

Weiter ist es möglich, die Steuervorrichtung derart auszuführen ist, dass dann, wenn der erste Temperaturschalter eine Versorgung des Heizelements mit elektrischer Energie bewirkt, ein Anzeigeelement aktiviert wird. Die Bedienperson wird dann jederzeit darüber informiert, wenn der Signalgeber für die Hubhöhe mittels des Heizelements beheizt wird.

Weitere Vorteile und Einzelheiten der Erfindung werden anhand des in den schematischen Figuren dargestellten Ausführungsbeispiels näher erläutert.

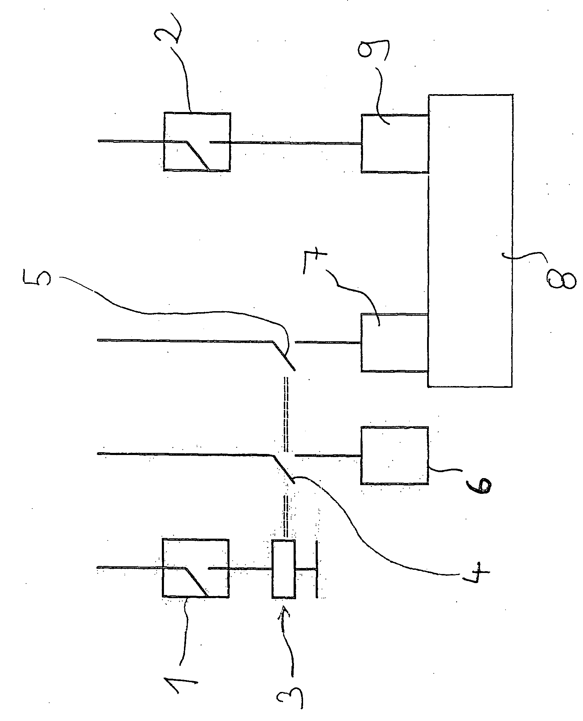

Die Figur zeigt das Schaltbild einer erfindungsgemäßen Anordnung mit einem ersten Temperaturschalter 1 und einem zweiten Temperaturschalter 2. Die beiden identisch ausgeführten Temperaturschalter 1, 2 sind derart ausgeführt, dass ein elektrischer Kontakt geschlossen wird, wenn die Umgebungstemperatur unter einen voreingestellten Wert fällt.

Der erste Temperaturschalter 1 steuert den Steuerstrom eines Relais 3, das einen ersten Schalter 4 und einen zweiten Schalter 5 aufweist. Dabei verbindet der erste Schalter 4 in geschlossener Stellung das mindestens eine Heizelement 6 mit einer Spannungsquelle. Der zweite Schalter 5 ist mit einem Signaleingang 7 einer elektrischen Steuervorrichtung 8 verbunden. Der zweite Temperaturschalter 2 dient lediglich zur Überprüfung der Funktion des ersten Temperaturschalters 1 und ist direkt an einen weiteren Signaleingang 9 der Steuervorrichtung 8 angeschlossen.

Die Steuervorrichtung ermittelt die Plausibilität der an den Signaleingängen 7, 9 anstehenden Signale. Insbesondere, wenn die beiden Temperaturschalter 1, 2 über längere Zeit hinweg unterschiedliche Schaltzustände aufweisen, wird hieraus auf die fehlerhafte Funktion eines der Temperaturschalter 1, 2 geschlossen und in der Steuervorrichtung 8 ein entsprechendes Fehlersignal erzeugt.

## Patentansprüche

1. Flurförderzeug mit einem Hubgerüst, mindestens einem im Bereich des Hubgerüsts angeordneten Signalgeber zum Erzeugen eines von der Hubhöhe des Hubgerüsts abhängigen Signals, mindestens einem Heizelement zum Erwärmen des Signalgebers und mindestens einem Temperaturschalter (1) zum Steuern des Heizelements in Abhängigkeit von einem Temperaturwert, **dadurch gekennzeichnet, dass** mindestens zwei Temperaturschalter (1, 2) vorgesehen sind, die mit einer elektrischen Steuervorrichtung (8) in Wirkverbindung stehen, wobei die Steuervorrichtung (8) derart ausgeführt ist, dass sie die Ausgangssignale der Temperaturschalter (1, 2) auf Plausibilität überprüft.

2. Flurförderzeug nach Anspruch 1, **dadurch gekennzeichnet, dass** die Temperaturschalter (1, 2) im Wesentlichen identisch ausgeführt sind.

3. Flurförderzeug nach Anspruch 1 oder 2, **dadurch gekennzeichnet, dass** die Temperaturschalter (1, 2) zueinander benachbart, vorzugsweise in unmittelbarer Nähe zueinander angeordnet sind.

4. Flurförderzeug nach einem der Ansprüche 1 bis 3, **dadurch gekennzeichnet, dass** das Ausgangssignal eines ersten Temperaturschalters (1) ein Relais (3) ansteuert, wobei ein Schalter (4) des Relais (3) mit einem Leistungseingang des Heizelements verbunden ist.

5. Flurförderzeug nach Anspruch 4, **dadurch gekennzeichnet, dass** ein Schalter (5) des Relais (4) mit einem Signaleingang der Steuervorrichtung (8) verbunden ist.

6. Flurförderzeug einem der Ansprüche 1 bis 5, **dadurch gekennzeichnet, dass** das Ausgangssignal eines ersten Temperaturschalters (1) direkt einem Signaleingang der Steuervorrichtung (8) zugeführt wird.

7. Flurförderzeug nach einem der Ansprüche 1 bis 6, **dadurch gekennzeichnet, dass** das Ausgangssignal eines zweiten Temperaturschalters (2) direkt einem Signaleingang der Steuervorrichtung (8) zugeführt wird.

8. Flurförderzeug nach einem der Ansprüche 1 bis 7, **dadurch gekennzeichnet, dass** die Steuervorrichtung (8) derart ausgeführt ist, dass die Überprüfung der Ausgangssignale der Temperaturschalter (1, 2) auf Plausibilität dadurch erfolgt, dass die Ausgangssignale verglichen werden.

9. Flurförderzeug nach einem der Ansprüche 1 bis 8, **dadurch gekennzeichnet, dass** die Steuervorrichtung (8) derart ausgeführt ist, dass die Ausgangssignale dann als nicht plausibel gelten, wenn Sie über einen vorgegebenen Zeitraum hinweg unterschiedliche Schaltstellungen der Temperaturschalter (1, 2) signalisieren.

10. Flurförderzeug nach einem der Ansprüche 1 bis 9, **dadurch gekennzeichnet, dass** die Steuervorrichtung (8) derart ausgeführt ist, dass dann, wenn die Ausgangssignale der Temperaturschalter (1, 2) als nicht plausibel gelten, eine Wameinrichtung aktiviert wird und/oder in eine Steuerung des Flurförderzeugs eingegriffen wird.

11. Flurförderzeug nach einem der Ansprüche 1 bis 10, **dadurch gekennzeichnet, dass** die Steuervorrichtung (8) derart ausgeführt ist, dass dann, wenn der erste Temperaturschalter (1) eine Versorgung des Heizelements mit elektrischer Energie bewirkt, ein Anzeigeelement aktiviert wird.
